# EUROPEAN PATENT SPECIFICATION

(11) **EP 4 081 409 B1**
(45) Date of publication and mention of the grant of the patent: **21.02.2024**
(21) Application number: 19839165.8
(22) Date of filing: 24.12.2019
(51) Int. Cl.: B60C 1/00, B60C 11/00, B60C 9/22, B60C 9/00

(54) **A TIRE FOR IMPROVED NOISE PERFORMANCE**
REIFEN FÜR VERBESSERTE RAUSCHLEISTUNG
PNEU POUR PERFORMANCES RELATIVES AU BRUIT AMÉLIORÉES

(43) Date of publication of application: 02.11.2022
(73) Proprietor: COMPAGNIE GENERALE DES ETABLISSEMENTS MICHELIN, 63000 Clermont-Ferrand (FR)
(72) Inventor: PROU Joris, Tokyo 163-1073 (JP); ENDERLIN Alexandre, Tokyo 163-1073 (JP)
(74) Representative: M.F.P. Michelin
(86) International application number: PCT/JP2019/050467
(87) International publication number: WO 2021/130832

(56) References cited:
- EP-A1- 0 827 845
- WO-A1-2012/119844
- WO-A1-2018/079799
- WO-A1-2019/133010
- US-A1- 2018 117 970

## Description

### [Technical Field]

The present invention relates to a tread for a tire, in particular to a tread for a tire provides improvement on noise performance.

### [Background Art]

In recent years, premiumisation and quality improvement of vehicles lead, from the view point of occupant's comfort and environmental considerations in particular toward an electrification of a vehicle, desire to various noise reductions.

It is known that the noise from the tires includes various components, that is a component from external noise and a component from internal noise. The internal noise includes a vibration due to excitation of a tread portion during rolling, the vibration is transmitted to a wheel rim, an axis, a suspension and a body of the vehicle then heard in an interior of the vehicle as noise.

In order to improve such noise, it is known that reduction of the vibration due to excitation of the tread portion by placing relatively soft rubber in the tread is effective. Various solutions have been proposed to improve such noise.

EP0827845 discloses a tire having a reduced rigidity rubber component interposed between a tread layer and a belt reinforcement, the reduced rigidity rubber component having a hardness and a geometry such that the maximum longitudinal and lateral contact stresses on the tread layer are reduced relative to a tire without such reduced rigidity rubber component.

WO2012119844 discloses a pneumatic vehicle tire having a tread which is comprised in the radial direction of two layers consisting of different rubber compounds, a tread cap and a tread base, and the tread base viewed in the axial direction has at least directed radially outward, a central segment and two lateral segments, the two lateral segments consist of a rubber compound that has a lower dynamic elastic modulus E' at 55 °C and a lower hysteresis than the central segment of the tread base for a lower rolling resistance without worsening the handling behavior.

JP2000198319 discloses a pneumatic tire having a tread portion in a two-layered structure of a cap tread layer and an under tread layer, the under tread layer is constituted by a center region and a shoulder region extended continuously from the center region to an outer, the regions comprising rubber composition different from each other, the center region is arranged with a rubber layer where JIS-A hardness is from 65 to 80, the shoulder region is arranged with a rubber layer where JIS-A hardness is from 50 to 70.

JP2009286317 discloses a tire having two layers tread, a base rubber and a cap rubber, the base rubber is divided into a center base rubber segment located at the widthwise center and shoulder base rubber segments located on both sides outside the center base rubber segment in the width direction, a dynamic modulus of the elasticity (E') of the center base rubber segment is 8.0 to 18.0 at 30°C, the dynamic modulus of the elasticity (E') of the shoulder base rubber segments is 3.0 to 7.0 at 30°C.

JP2008049923 discloses a pneumatic tire provided with a belt reinforcing layer disposed in an outer area in a tire width direction than a position separated from a tire equator line by at least one third of tread width, the belt reinforcing layer is constructed by rubberizing a plurality of reinforcing cords of tension strength equal to or more than a belt cord, and the reinforcing cords are extending obliquely with regard to a tire circumferential direction for reducing road noise in a frequency range from 315 to 500 Hz. WO2019133010 discloses a pneumatic tire having improved high speed limits while generally maintaining wear, traction, and handling performance. Said tires include a cap ply extending substantially across a full width of at least one of the belt plies and being arranged at least partially within each shoulder, the cap ply forming a layer of elastomeric material reinforced with a plurality of elongate reinforcements spaced apart in an array, the cap ply being characterized as having a rupture force greater than 210 N per 15 mm of the cap ply width. In each shoulder area of said tires, the tread is characterized as being flatter and having a greater tread thickness.

### [Citation List]

### [Patent Literature]

[PTL 1]
   EP0827845
[PTL 2]
   WO2012119844
[PTL 3]
   JP2000198319
[PTL 4]
   JP2009286317
[PTL 5]
   JP2008049923
[PTL 6]
   WO2019133010

However with the solutions disclosed in these documents, improvement on noise performance is not satisfactory. Also at the same time, degradation of handling performance is not an acceptable level. Thus there is a desire to further improvement of noise performance while maintaining reasonable level on handling performance.

Therefore, there is a need for a tire which provides improvement on noise performance while maintaining reasonable level on handling performance.

### Definitions:

A "radial direction/orientation" is a direction/orientation perpendicular to axis of rotation of the tire. This direction/orientation corresponds to thickness orientation of the tread.

An "axial direction/orientation" is a direction/orientation parallel to axis of rotation of the tire.

A "circumferential direction/orientation" is a direction/orientation which is tangential to any circle centered on axis of rotation. This direction/orientation is perpendicular to both the axial direction/orientation and the radial direction/orientation.

A "tire" means all types of elastic tire whether or not subjected to an internal pressure.

A "tread" of a tire means a quantity of rubber material bounded by lateral surfaces and by two main surfaces one of which is intended to come into contact with ground when the tire is rolling.

A "groove" is a space between two rubber faces/sidewalls which do not contact between themselves under usual rolling condition connected by another rubber face/ bottom. A groove has a width and a depth.

A "contact patch" is a footprint of a tire mounted onto its standard rim as identified in tire standards such as ETRTO, JATMA or TRA, and inflated at its nominal pressure and under its nominal load. A "width TW" of a contact face is a maximum contact width of the contact patch along with an axis of rotation of the tire.

A "shear storage modulus G'" is a shear storage modulus measured at 23°C, 10Hz and 10% of strain.

It is thus an object of the invention to provide a tire which provides improvement on noise performance while maintaining reasonable level on handling performance.

### [Summary of Invention]

The present invention provides a tire comprising a tread, at least one carcass ply placed radially inward of the tread and at least one ply placed radially inbetween the tread and the at least one carcass ply, the tread having a contact face of a width TW intended to come into contact with ground during rolling, the tread being provided with at least one groove of a depth D extending generally in circumferential orientation and opening to the contact face, the tread comprising a center region and a pair of shoulder regions being positioned on two axial sides of the center region, the pair of shoulder regions each comprising a shoulder rubber layer of a thickness ts made of a shoulder rubber composition different from a rubber composition constituting the tread, a shear storage modulus G' of the shoulder rubber composition being less than or equal to 1.0 MPa, the tire further comprising a cap ply whose cable extends generally in circumferential orientation and positioned radially inbetween the tread and the at least one ply at least in a region corresponding to the pair of shoulder regions of the tread and the at least one ply, a force F_{5%} of the cap ply is greater than 900 N per 10 mm of a cap ply width under 5% strain in a direction cable of the cap ply is extending.

This arrangement provides an improvement on noise performance while maintaining reasonable level on handling performance.

Since the shoulder rubber layer is comprised in the pair of shoulder regions and not the center region, degradation on handling performance is limited as the center region has a dominant impact on handling performance due to longer contact length compared to shoulder regions. Therefore it is possible to maintain reasonable level on handling performance.

Since the pair of shoulder regions each comprising a shoulder rubber layer, and the shear storage modulus G' of the shoulder rubber composition is less than or equal to 1.0 MPa, the shoulder rubber layer can effectively reduce excitation of the tread during rolling. Therefore it is possible to improve noise performance.

If the shear storage modulus G' of the shoulder rubber composition is more than 1.0 MPa, there is a risk that an improvement on noise performance would be insufficient. By setting the shear storage modulus G' of the shoulder rubber composition less than or equal to 1.0 MPa, the shoulder rubber layer can effectively reduce excitation of the tread during rolling.

This shear storage modulus G' of the shoulder rubber composition is preferably from 0.1 to 1.0 MPa, more preferable from 0.1 to 0.7 MPa.

Since the tire further comprising the cap ply whose cable extends generally in circumferential orientation and positioned radially inbetween the tread and the at least one ply at least in a region corresponding to the pair of shoulder regions of the tread, the cap ply can provide extra rigidity to the tread recovering a loss of tread rigidity due to the shoulder rubber layer provided with the shoulder rubber composition. Therefore it is possible to improve handling performance.

Since the force F_{5%} of the cap ply is greater than 900 N per 10 mm of a cap ply width under 5% strain in a direction cable of the cap ply is extending, such the cap ply shifts flexural modes of the tread to higher frequency range while further stiffening the tread. Therefore it is possible to improve effectively noise performance while maintaining handling performance.

In another preferred embodiment, the cap ply is provided as to cover whole width of radially outermost ply of the at least one ply.

According to this arrangement, it is possible to improve effectively noise performance while maintaining handling performance as the cap ply works both for improving handling performance and for effectively suppress vibration caused by flexural modes of the tread.

In another preferred embodiment, the shoulder rubber layer is invisible on the contact face when the tire being brand new.

According to this arrangement, it is possible to exhibit a good initial performance not only for noise and handling but also for other performances, as a contact patch is occupied by the rubber composition constituting the tread which is designed to realize balanced performance.

In another preferred embodiment, the shoulder rubber layer is provided radially below a level of 50% of the depth D of the at least one groove.

According to this arrangement, it is possible to keep the good initial performance not only for noise and handling but also for other performances longer, as the contact patch is continue occupied by the rubber composition constituting the tread which is designed to realize balanced performance at least until middle of wear life.

In a tire according to the present invention the center region comprises a center rubber layer of a thickness tf made of a center rubber composition different from both the shoulder rubber composition and the rubber composition constituting the rest of the tread, and a shear storage modulus G' of the center rubber composition is higher than the shear storage modulus G' of the rubber composition constituting the rest of the tread.

According to this arrangement, it is possible to improve handling performance, as the center rubber layer made of the center rubber composition having higher shear storage modulus G' than the shear storage modulus G' of the rubber composition constituting the rest of the tread deforms less and the tread in the center region other than the center rubber layer need to deform more at a given slip angle thus generates stronger lateral force.

In another preferred embodiment, the thickness tf of the center rubber layer is thinner than the thickness ts of the shoulder rubber layer.

According to this arrangement, it is possible to improve both noise and handling performances simultaneously and efficiently, as thicker shoulder rubber layer thickness ensures reduction of tread excitation, and thinner center rubber layer thickness ensures generation of higher lateral force.

If the thickness tf of the center rubber layer is thicker than the thickness ts of the shoulder rubber layer, there is a risk that reduction of tread excitation by the shoulder rubber layer becomes insufficient due to relatively smaller volume of the shoulder rubber layer compare with the center rubber layer, thus improvement on noise performance becomes insufficient. By setting the thickness tf of the center rubber layer thinner than the thickness ts of the shoulder rubber layer, it is possible to improve both noise and handling performance simultaneously and efficiently.

In another preferred embodiment, the shear storage modulus G' of the rubber composition constituting the tread other than the center rubber layer or the shoulder rubber layer is less than or equal to 6.0 MPa.

If the shear storage modulus G' of the rubber composition constituting the tread other than the center rubber layer or the shoulder rubber layer is more than 6.0 MPa, there is a risk that improvement on noise performance becomes insufficient, as the tread itself becomes too hard even provided with the shoulder rubber layer. By setting the shear storage modulus G' of the rubber composition constituting the tread other than the center rubber layer or the shoulder rubber layer less than or equal to 6.0 MPa, it is possible to improve noise performance while improving or at least maintaining reasonable level on handling performance.

The shear storage modulus G' of the rubber composition constituting the tread other than the center rubber layer or the shoulder rubber layer is preferably less than or equal to 4.0 MPa, more preferably less than or equal to 3.0 MPa.

### [Advantageous Effects of Invention]

According to the arrangements described above, it is possible to provide a tire which provides improvement on noise performance while maintaining reasonable level on handling performance.

### [Brief Description of Drawings]

Other characteristics and advantages of the invention arise from the description made hereafter in reference to the annexed drawings which show, as nonrestrictive examples, the embodiment of the invention.

In these drawings:
[Fig. 1]

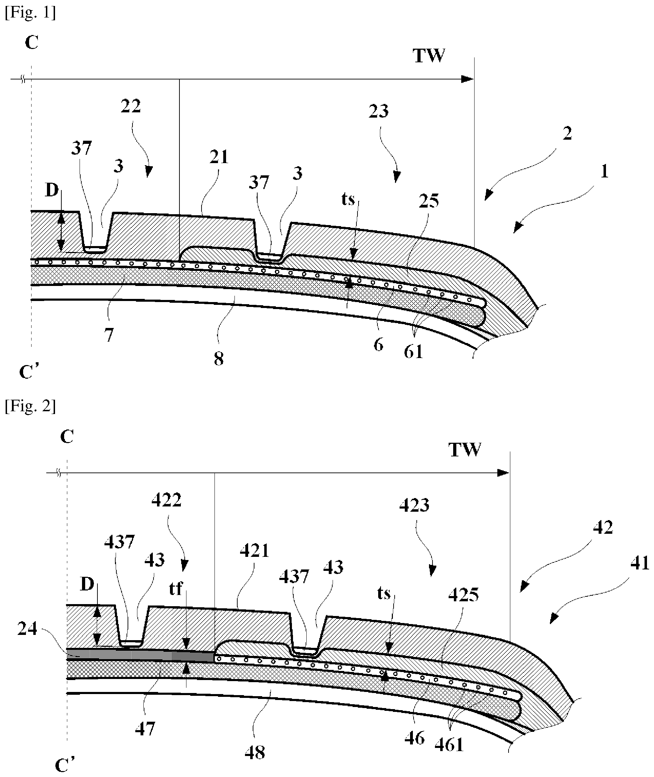

   Fig. 1 is a schematic cross sectional view of a tire according to a first embodiment, which is not an embodiment according to the present invention;
[Fig. 2]
   Fig. 2 is a schematic cross sectional view of a tire according to a second embodiment, which ist an embodiment according to the present invention;
[Fig. 3]

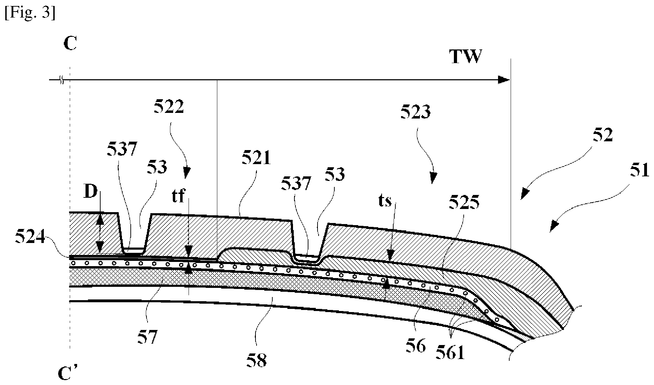

   Fig. 3 is a schematic cross sectional view of a tire according to a third embodiment, which is another embodiment of the present invention;

### [Description of Embodiments]

Preferred embodiments of the present invention will be described below referring to the drawings.

A tire 1 according to a first embodiment, which is not an embodiment according to the present invention, will be described referring to Fig. 1.

Fig. 1 is a schematic cross sectional view of a tire according to a first embodiment. The tire 1 shown in the figure 1 is a half of a portion of a tread of the tire 1 divided with respect to a center line C-C' extending in radial orientation. Portions other than shown in this Fig. 1, for example sidewall portion or bead portion, are typical radial tire construction thus explanation of such the portions will be omitted.

The tire 1 is a tire having dimension 235/45R18 and comprises a tread 2, at least one carcass ply 8 placed radially inward of the tread 2 and at least one ply 7 placed radially inbetween the tread 2 and the at least one carcass ply 8. The tread 2 has a contact face 21 of a width TW intended to come into contact with ground during rolling. The tread 2 is provided with at least one groove 3 of a depth D extending generally in circumferential orientation and opening to the contact face 21. The groove 3 is provided with a wear indicating mean 37 which indicates legal wear limit of the tire 1. The tread 2 comprises a center region 22 containing the center line C-C' and a pair of shoulder regions 23 being positioned on two axial sides of the center region 22. The tread 2 is equally divided into 3 regions, one center region 22 and two shoulder regions 23 with the width TW. As same as typical radial tire construction, a carcass ply 8 (or a casing ply), a main body of the tire which may or may not be provided with an inner liner for inhibiting loss of air pressure, and a ply 7 (or a belt), one or more rubber-coated layers of metallic or textile or other material in a form of cable or wire or strings, are provided radially inward of the tread 2.

As shown in Fig. 1, the pair of shoulder regions 23 each comprises a shoulder rubber layer 25 of a thickness ts made of a shoulder rubber composition different from a rubber composition constituting the tread 2. The thickness ts of the shoulder rubber layer 25 should be understood as a mean thickness of the shoulder rubber layer 25 measured perpendicular to the carcass ply 8 except under the groove 3 and until axially outermost of the ply 7.

As shown in Fig. 1, the shoulder rubber layer 25 is invisible on the contact face 21 when the tread 2 being brand new, and the shoulder rubber layer 25 is provided radially below a level of 50% of the depth D of the at least one groove 3. A shear storage modulus G' of the shoulder rubber composition is less than or equal to 1.0 MPa, and a shear storage modulus G' of the rubber composition constituting the tread 2 is less than or equal to 6.0 MPa. In the present embodiment, the shear storage modulus G' of the shoulder rubber composition is 0.15 MPa, and the shear storage modulus G' of the rubber composition constituting the tread 2 is 2.3 MPa.

As shown in Fig. 1, the tire 1 further comprises a cap ply 6 positioned radially inbetween the tread 2 and the at least one ply 7 as to cover whole width of radially outermost ply 7 of the at least one ply 7. Cables 61 of the cap ply 6 extends generally in circumferential orientation of the tire 1, that is to say within 10° relative to circumferential orientation. A force F_{5%} of the cap ply per 10 mm of a cap ply width under 5% strain in a direction cable 61 of the cap ply 6 is extending is greater than 900 N. In the present embodiment, the force F_{5%} of the cap ply 6 per 10 mm of a cap ply width under 5% strain in a direction cable 61 of the cap ply 6 is extending is 1,248 N.

A material used as cables 61 of the cap ply 6 is, for example metal cords such as steel or textile cords such as rayon, aramid, polyethylene, nylon, glass fiber, carbon fiber, basalt fiber, PEN, PVA or combination of these cords. In the present embodiment, the cable 61 of the cap ply 6 is combination of aramid and nylon.

Since the shoulder rubber layer 25 is comprised in the pair of shoulder regions 23 and not the center region 22, degradation on handling performance is limited as the center region 22 has a dominant impact on handling performance due to longer contact length compared to shoulder regions 23. Therefore it is possible to maintain reasonable level on handling performance.

Since the pair of shoulder regions 23 each comprising a shoulder rubber layer 25, and the shear storage modulus G' of the shoulder rubber composition is less than or equal to 1.0 MPa, the shoulder rubber layer 25 can effectively reduce excitation of the tread 2 during rolling. Therefore it is possible to improve noise performance.

If the shear storage modulus G' of the shoulder rubber composition is more than 1.0 MPa, there is a risk that an improvement on noise performance would be insufficient. By setting the shear storage modulus G' of the shoulder rubber composition less than or equal to 1.0 MPa, the shoulder rubber layer 25 can effectively reduce excitation of the tread 2 during rolling.

This shear storage modulus G' of the shoulder rubber composition is preferably from 0.1 to 1.0 MPa, more preferable from 0.1 to 0.7 MPa.

Since the tire 1 further comprising the cap ply 6 whose cable 61 extends generally in circumferential orientation and positioned radially inbetween the tread 2 and the at least one ply 7 at least in a region corresponding to the pair of shoulder regions 23 of the tread 2, the cap ply 6 can provide extra rigidity to the tread 2 recovering a loss of tread rigidity due to the shoulder rubber layer 25 provided with the shoulder rubber composition. Therefore it is possible to improve handling performance.

Since the force F_{5%} of the cap ply 6 is greater than 900 N per 10 mm of a cap ply width under 5% strain in a direction cable 61 of the cap ply 6 is extending, such the cap ply 6 shifts flexural modes of the tread 2 to higher frequency range while further stiffening the tread 2. Therefore it is possible to improve effectively noise performance while maintaining handling performance.

The force F_{5%} can be obtained as a force (N) applied to the cap ply 6 at 5% intermediate elongation sampled in 10 mm width and elongated in a direction cable 61 of the cap ply 6 is extending in accordance with standard JIS L 1017.

Since the cap ply 6 is provided as to cover whole width of radially outermost ply 7 of the at least one ply 7, it is possible to improve effectively noise performance while maintaining handling performance as the cap ply 6 works both for improving handling performance and for effectively suppress vibration caused by flexural modes of the tread 2.

Since the shoulder rubber layer 25 is invisible on the contact face 21 when the tire 1 being brand new, it is possible to exhibit a good initial performance not only for noise and handling but also for other performances, as a contact patch is occupied by the rubber composition constituting the tread 2 which is designed to realize balanced performance.

Since the shoulder rubber layer 25 is provided radially below a level of 50% of the depth D of the at least one groove 3, it is possible to keep the good initial performance not only for noise and handling but also for other performances longer, as the contact patch is continue occupied by the rubber composition constituting the tread 2 which is designed to realize balanced performance at least until middle of wear life.

The pair of shoulder regions 23 may have different width from one another. The width of one shoulder region 23 is preferably less than or equal to one third of the width TW of the tread 2, more preferably from 10 to 25% of the width TW of the tread 2. If the width of one shoulder region 23 is more than one third of the width TW of the tread 2, there is a risk that degradation on handling performance due to shoulder rubber layer 25 becomes unacceptable. If the width of one shoulder region 23 is less than 10% of the width TW of the tread 2, there is a risk that reduction of tread excitation becomes insufficient results insufficient improvement on noise performance.

A tire 41 according to a second embodiment, which is an embodiment of the present invention, will be described referring to Fig. 2. Fig. 2 is a schematic cross sectional view of a tire according to an embodiment of the present invention. The construction of this second embodiment is similar to that of the first embodiment other than the arrangement shown in Fig. 2, thus description will be made referring to Fig. 2.

As shown in Fig. 2, a tire 41 comprises a tread 42, at least one carcass ply 48 placed radially inward of the tread 42 and at least one ply 47 placed radially inbetween the tread 42 and the at least one carcass ply 48. The tread 42 has a contact face 421 of a width TW intended to come into contact with ground during rolling. The tread 42 is provided with at least one groove 43 of a depth D extending generally in circumferential orientation and opening to the contact face 421. The groove 43 is provided with a wear indicating mean 437 which indicates legal wear limit of the tire 41. The tread 42 comprises a center region 422 containing the center line C-C' and a pair of shoulder regions 423 being positioned on two axial sides of the center region 422. The tread 42 is equally divided into 3 regions, one center region 422 and two shoulder regions 423 with the width TW.

As shown in Fig. 2, the pair of shoulder regions 423 each comprises a shoulder rubber layer 425 of a thickness ts made of a shoulder rubber composition different from a rubber composition constituting the tread 42, and the center region 422 comprises a center rubber layer 24 of a thickness tf made of a center rubber composition different from both the shoulder rubber composition and the rubber composition constituting the tread 42. A shear storage modulus G' of the center rubber composition is higher than the shear storage modulus G' of the rubber composition constituting the tread 42. A shear storage modulus G' of the rubber composition constituting the tread 42 other than the center rubber layer 24 or the shoulder rubber layer 425 is less than or equal to 6.0 MPa. The thickness tf of the center rubber layer 24 is thinner than the thickness ts of the shoulder rubber layer 425. In the present embodiment, a shear storage modulus G' of the shoulder rubber composition is 0.3 MPa, the shear storage modulus G' of the center rubber composition is 12.2 MPa, the shear storage modulus G' of the rubber composition constituting the tread 42 other than the center rubber layer 24 or the shoulder rubber layer 425 is 2.3 MPa.

As shown in Fig. 2, the tire 41 further comprising a cap ply 46 whose cable 461 extends generally in circumferential orientation and positioned radially inbetween the tread 42 and the at least one ply 47 in a region corresponding to the pair of shoulder regions 423 of the tread 42

Since the center region 422 comprises a center rubber layer 24 of a thickness tf made of a center rubber composition different from both the shoulder rubber composition and the rubber composition constituting the tread 42, and a shear storage modulus G' of the center rubber composition is higher than the shear storage modulus G' of the rubber composition constituting the tread 42, it is possible to improve handling performance, as the center rubber layer 24 made of the center rubber composition having higher shear storage modulus G' than the shear storage modulus G' of the rubber composition constituting the tread 42 deforms less and the tread 42 in the center region 422 other than the center rubber layer 24 need to deform more at a given slip angle thus generates stronger lateral force.

Since the thickness tf of the center rubber layer 24 is thinner than the thickness ts of the shoulder rubber layer 425, it is possible to improve both noise and handling performances simultaneously and efficiently, as thicker shoulder rubber layer thickness ensures reduction of tread excitation, and thinner center rubber layer thickness ensures generation of higher lateral force.

If the thickness tf of the center rubber layer 24 is thicker than the thickness ts of the shoulder rubber layer 425, there is a risk that reduction of tread excitation by the shoulder rubber layer 425 becomes insufficient due to relatively smaller volume of the shoulder rubber layer 425 compare with the center rubber layer 24, thus improvement on noise performance becomes insufficient. By setting the thickness tf of the center rubber layer 24 thinner than the thickness ts of the shoulder rubber layer 425, it is possible to improve both noise and handling performance simultaneously and efficiently.

Since the shear storage modulus G' of the rubber composition constituting the tread 42 other than the center rubber layer 24 or the shoulder rubber layer 425 is less than or equal to 6.0 MPa, it is possible to improve noise performance while improving or at least maintaining reasonable level on handling performance.

If the shear storage modulus G' of the rubber composition constituting the tread 42 other than the center rubber layer 24 or the shoulder rubber layer 425 is more than 6.0 MPa, there is a risk that improvement on noise performance becomes insufficient, as the tread 42 itself becomes too hard even provided with the shoulder rubber layer 425.

The center rubber layer 24 and the shoulder rubber layer 425 may or may not be contact each other

A tire 51 according to a third embodiment, which is another embodiment of the present invention, will be described referring to Fig. 3. Fig. 3 is a schematic cross sectional view of another embodiment of the present invention. The construction of this third embodiment is similar to that of the first and the second embodiment other than the arrangement shown in Fig. 3, thus description will be made referring to Fig. 3.

As shown in Fig. 3, the pair of shoulder regions 523 each comprises a shoulder rubber layer 525 of a thickness ts made of a shoulder rubber composition different from a rubber composition constituting the tread 52, and the center region 522 comprises a center rubber layer 524 of a thickness tf made of a center rubber composition different from both the shoulder rubber composition and the rubber composition constituting the tread 52. A shear storage modulus G' of the center rubber composition is higher than the shear storage modulus G' of the rubber composition constituting the tread 52. A shear storage modulus G' of the rubber composition constituting the tread 52 other than the center rubber layer 524 or the shoulder rubber layer 525 is less than or equal to 6.0 MPa. The thickness tf of the center rubber layer 524 is thinner than the thickness ts of the shoulder rubber layer 525.

As shown in Fig. 3, the tire 51 further comprising a cap ply 56 whose cable 561 extends generally in circumferential orientation and positioned radially inbetween the tread 52 and the at least one ply 57 as to cover whole width of the ply 57.

Since the cap ply 56 is provided as to cover whole width of the ply 57, it is further possible to improve effectively noise performance while maintaining handling performance as the cap ply 56 works both for improving handling performance and for effectively suppress vibration caused by flexural modes of the tread 52.

The invention is not limited to the examples described and represented and various modifications can be made there without leaving its framework.

### [Examples]

In order to confirm the effect of the present invention, one type of tire of Example to which the present invention is applied and other types of tire of Reference and Comparative Examples were prepared.

The Example was a tire provided with a tread as described in the above first embodiment; a width of one shoulder region was one third of a width of the tread TW, a shear storage modulus G' of a shoulder rubber composition was 0.15 MPa, a shear storage modulus G' of a rubber composition constituting the tread other than a shoulder rubber layer was 2.3 MPa, a force F_{5%} of the cap ply was 1,248 N per 10 mm of a cap ply width under 5% strain in a direction cable of the cap ply is extending. The Reference was a tire provided with a tread without shoulder rubber layer nor center rubber layer, a shear storage modulus G' of a rubber composition constituting the tread was 2.3 MPa, a force F_{5%} of the cap ply was 365 N per 10 mm of a cap ply width under 5% strain in a direction cable of the cap ply is extending. The Comparative Example 1 was a tire provided with a tread similar to the Reference with a force F_{5%} of the cap ply was 1,248 N per 10 mm of a cap ply width under 5% strain in a direction cable of the cap ply is extending. The Comparative Example 2 was a tire provided with a tread similar to the Example with a force F_{5%} of the cap ply was 365 N per 10 mm of a cap ply width under 5% strain in a direction cable of the cap ply is extending.

### Noise performance test:

Unused test tires were mounted onto all four wheels of a 2,500 cc rear-wheel drive vehicle. On a straight path weathered asphalt, the vehicle was driven at a constant speed of 80 kph. An interior noise was measured using a microphone positioned at a passenger's ear close to window. An A-weighted sound pressure level between 0 and 500 Hz was calculated.

The results are shown in table 1. In this table 1, results are represented by difference in dB(A) against Reference, lower the value indicates better the performance.

### Handling test:

A cornering power of unused test tires mounted onto a standard rim and inflated to nominal internal pressure was measured using a flat belt tire tester. A load of 460kg was applied while tires driven at a constant speed of 80 kph, lateral force at a slip angle ±1° was measured, and the lateral forces measured at +1° and at -1° in absolute value were averaged.

The results are also shown in table 1. In this table 1, results are represented by an index of 100 for Reference, higher the number indicates better the performance.

**[Table 1]**

| | Example | Comparative Example 1 | Comparative Example 2 | Reference |
|---|---|---|---|---|
| F_{5%} of the cap ply (N) | 1248 | 1248 | 365 | 365 |
| G' of tread (MPa) | 2.3 | 2.3 | 2.3 | 2.3 |
| G' of shoulder rubber (MPa) | 0.15 | - | 0.15 | - |
| Noise performance (dBA) | -1.2 | 0.0 | -1.0 | 0.0 |
| Handling performance (index) | 101 | 109 | 93 | 100 |

As seen from table 1, the Examples show improvement on noise performance while improving or maintaining reasonable level on handling performance, which cannot be achieved by treads disclosed in prior arts.

### [Reference Signs List]

- 1, 41, 51: tire
- 2, 42, 52: tread
- 21, 421, 521: contact face
- 22, 422, 522: center region
- 23, 423, 523: shoulder region
- 24, 524: center rubber layer
- 25, 425, 525: shoulder rubber layer
- 3, 43, 53: groove
- 37, 437, 537: wear indicating mean
- 6, 46, 56: cap ply
- 61, 461, 561: cable
- 7, 47, 57: ply
- 8, 48, 58: carcass ply

## Claims

1. A tire (41;51) comprising a tread (42;52) at least one carcass ply (48; 58) placed radially inward of the tread (42; 52) and at least one ply (47;57) placed radially inbetween the tread (42; 52) and the at least one carcass ply (48; 58), the tread (42;52) having a contact face (421;521) of a width TW intended to come into contact with the ground during rolling, the tread (42;52) being provided with at least one groove (43;53) of a depth D extending generally in circumferential orientation and opening to the contact face (421;521), the tread (42;52) comprising a center region (422;522) and a pair of shoulder regions (423;523) being positioned on two axial sides of the center region (422;522), the pair of shoulder regions (423;523) each comprising a shoulder rubber layer (425;525) of a thickness ts made of a shoulder rubber composition different from a rubber composition constituting a rest of the tread (42;52), a shear storage modulus G' of the shoulder rubber composition measured at 23°C, 10Hz and 10% of strain being less than or equal to 1.0 MPa, the tire (41;51) further comprising a cap ply (46;56) whose cable (461;561) extends generally in the circumferential orientation and is positioned radially inbetween the tread (42;52) and the at least one ply (47;57) at least in a region corresponding to the pair of shoulder regions (423;523) of the tread (42;52),
the tire being **characterized in that**
a force F_{5%} of the cap ply (46;56) is greater than 900 N per 10 mm of a cap ply width under 5% strain in a direction, where the cable (461;561) of the cap ply (46;56) is extending,
and **in that** the center region (422;522) comprises a center rubber layer (24;524) of a thickness tf made of a center rubber composition different from both the shoulder rubber composition and the rubber composition constituting a rest of the tread (42;52), and **in that** a shear storage modulus G' of the center rubber composition measured at 23 °C, 10Hz and 10% of strain is higher than the shear storage modulus G' of the rubber composition constituting the rest of the tread (42;52).

2. The tire (1) according to Claim 1, **wherein** the cap ply (56) is provided as to cover the whole width of a radially outermost ply (57) of the at least one ply (57).

3. The tire (1) according to Claim 1 or Claim 2, **wherein** the shoulder rubber layer (425;525) is invisible on the contact face (421;521) when the tire (41;51) is brand new.

4. The tire (41;51) according to any one of the Claims 1 to 3, wherein the shoulder rubber layer (425;525) is provided radially below a level of 50% of the depth D of the at least one groove (43;53).

5. The tire (1) according to any one of the Claims 1 to 4, **wherein** the thickness tf of the center rubber layer (24;524) is thinner than the thickness ts of the shoulder rubber layer (425;525).

6. The tire (41;51) according to any one of the Claims 1 to 5, **wherein** the shear storage modulus G' of the rubber composition constituting the tread (42;52) other than the center rubber layer (24; 524) or the shoulder rubber layer (425;525) measured at 23°C, 10Hz and 10% of strain is less than or equal to 6.0 MPa.

## Patentansprüche

1. Reifen (41;51), umfassend eine Lauffläche (42;52), wenigstens eine Karkassenlage (48;58), die radial innenliegend bezogen auf die Lauffläche (42;52) angeordnet ist, und wenigstens eine Lage (47;57), die radial zwischen der Lauffläche (42;52) und der wenigstens einen Karkassenlage (48;58) angeordnet ist, wobei die Lauffläche (42;52) eine Kontaktfläche (421;521) mit einer Breite TW aufweist, die dafür vorgesehen ist, während des Rollens mit dem Boden in Kontakt zu kommen, wobei die Lauffläche (42;52) mit wenigstens einer Rille (43;53) mit einer Tiefe D versehen ist, die allgemein in Umfangsrichtung verläuft und sich zu der Kontaktfläche (421;521) öffnet, wobei die Lauffläche (42;52) einen mittleren Bereich (422;522) und ein Paar von Schulterbereichen (423;523), die an zwei axialen Seiten des mittleren Bereichs (422;522) angeordnet sind, umfasst, wobei das Paar von Schulterbereichen (423;523) jeweils eine Schulter-Kautschukschicht (425;525) mit einer Dicke ts umfasst, die aus einer Schulter-Kautschukzusammensetzung hergestellt ist, die von einer Kautschukzusammensetzung, die einen Rest der Lauffläche (42;52) bildet, verschieden ist, wobei ein Scherspeichermodul G' der Schulter-Kautschukzusammensetzung, gemessen bei 23 °C, 10 Hz und 10 % Dehnung, kleiner als oder gleich 1,0 MPa ist, wobei der Reifen (41;51) ferner eine Decklage (46;56) umfasst, deren Kabel (461;561) allgemein in der Umfangsrichtung verläuft und radial zwischen der Lauffläche (42;52) und der wenigstens einen Lage (47;57) wenigstens in einem Bereich, der dem Paar von Schulterbereichen (423;523) der Lauffläche (42;52) entspricht, angeordnet ist, wobei der Reifen **dadurch gekennzeichnet ist, dass** eine Kraft F_{5%} der Decklage (46;56) größer als 900 N pro 10 mm einer Decklagenbreite unter 5 % Dehnung in einer Richtung, in der das Kabel (461;561) der Decklage (46;56) verläuft, ist, und dass der mittlere Bereich (422;522) eine mittlere Kautschukschicht (24;524) mit einer Dicke tf umfasst, die aus einer mittleren Kautschukzusammensetzung hergestellt ist, die sowohl von der Schulter-Kautschukzusammensetzung als auch der Kautschukzusammensetzung, die einen Rest der Lauffläche (42;52) bildet, verschieden ist, und dass ein Scherspeichermodul G' der mittleren Kautschukzusammensetzung, gemessen bei 23 °C, 10 Hz und 10 % Dehnung, größer ist als der Scherspeichermodul G' der Kautschukzusammensetzung, die den Rest der Lauffläche (42;52) bildet.

2. Reifen (1) gemäß Anspruch 1, wobei die Decklage (56) bereitgestellt ist, um die gesamte Breite einer radial am weitesten außen liegenden Lage (57) der wenigstens einen Lage (57) zu bedecken.

3. Reifen (1) gemäß Anspruch 1 oder Anspruch 2, wobei die Schulter-Kautschukschicht (425;525) nicht auf der Kontaktfläche (421;521) sichtbar ist, wenn der Reifen (41;51) fabrikneu ist.

4. Reifen (41;51) gemäß einem der Ansprüche 1 bis 3, wobei die Schulter-Kautschukschicht (425;525) radial unter einer Ebene von 50 % der Tiefe D der wenigstens einen Rille (43;53) bereitgestellt ist.

5. Reifen (1) gemäß einem der Ansprüche 1 bis 4, wobei die Dicke tf der mittleren Kautschukschicht (24;524) dünner als die Dicke ts der Schulter-Kautschukschicht (425;525) ist.

6. Reifen (41;51) gemäß einem der Ansprüche 1 bis 5, wobei der Scherspeichermodul G' der Kautschukzusammensetzung, die die Lauffläche (42;52) bildet, verschieden von der mittleren Kautschukschicht (24;524) und der Schulter-Kautschukschicht (425;525), gemessen bei 23 °C, 10 Hz und 10 % Dehnung, kleiner als oder gleich 6,0 MPa ist.

## Revendications

1. Pneu (41 ; 51) comprenant une bande de roulement (42 ; 52), au moins une nappe carcasse (48 ; 58) placée radialement à l'intérieur de la bande de roulement (42 ; 52) et au moins une nappe (47 ; 57) placée radialement entre la bande de roulement (42 ; 52) et l'au moins une nappe carcasse (48 ; 58), la bande de roulement (42 ; 52) ayant une face de contact (421 ; 521) d'une largeur TW destinée à venir en contact avec le sol pendant le roulement, la bande de roulement (42 ; 52) étant pourvue d'au moins une rainure (43 ; 53) d'une profondeur D s'étendant généralement dans une orientation circonférentielle et s'ouvrant vers la face de contact (421 ; 521), la bande de roulement (42 ; 52) comprenant une région centrale (422 ; 522) et une paire de régions d'épaule (423 ; 523) positionnées sur deux côtés axiaux de la région centrale (422 ; 522), les régions de la paire de régions d'épaule (423 ; 523) comprenant chacune une couche de caoutchouc d'épaule (425 ; 525) d'une épaisseur ts constituée d'une composition de caoutchouc d'épaule différente d'une composition de caoutchouc constituant un reste de la bande de roulement (42 ; 52), un module de conservation en cisaillement G' de la composition de caoutchouc d'épaule mesuré à 23 °C, 10 Hz et 10 % de déformation étant inférieur ou égal à 1,0 MPa, le pneu (41 ; 51) comprenant en outre une nappe sommet (46 ; 56) dont le câble (461 ; 561) s'étend généralement dans l'orientation circonférentielle et est positionné radialement entre la bande de roulement (42 ; 52) et l'au moins une nappe (47 ; 57) au moins dans une région correspondant à la paire de régions d'épaule (423 ; 523) de la bande de roulement (42 ; 52), le pneu étant **caractérisé en ce qu'**une force F_{5%} de la nappe sommet (46 ; 56) est supérieure à 900 N pour 10 mm de largeur de nappe sommet sous 5 % de déformation dans une direction où s'étend le câble (461 ; 561) de la nappe sommet (46 ; 56), et **en ce que** la région centrale (422 ; 522) comprend une couche de caoutchouc centrale (24 ; 524) d'une épaisseur tf constituée d'une composition de caoutchouc centrale différente à la fois de la composition de caoutchouc d'épaule et de la composition de caoutchouc constituant un reste de la bande de roulement (42 ; 52), et **en ce qu'**un module de conservation en cisaillement G' de la composition de caoutchouc centrale mesuré à 23 °C, 10 Hz et 10 % de déformation est supérieur au module de conservation en cisaillement G' de la composition de caoutchouc constituant le reste de la bande de roulement (42 ; 52).

2. Pneu (1) selon la revendication 1, dans lequel la nappe sommet (56) est disposée de manière à couvrir la largeur entière d'une nappe radialement la plus extérieure (57) de l'au moins une nappe (57).

3. Pneu (1) selon la revendication 1 ou la revendication 2, dans lequel la couche de caoutchouc d'épaule (425 ; 525) est invisible sur la face de contact (421 ; 521) quand le pneu (41 ; 51) est neuf.

4. Pneu (41 ; 51) selon l'une quelconque des revendications 1 à 3, dans lequel la couche de caoutchouc d'épaule (425 ; 525) est disposée radialement en dessous d'un niveau de 50 % de la profondeur D de l'au moins une rainure (43 ; 53).

5. Pneu (1) selon l'une quelconque des revendications 1 à 4 dans lequel l'épaisseur tf de la couche de caoutchouc centrale (24 ; 524) est plus fine que l'épaisseur ts de la couche de caoutchouc d'épaule (425 ; 525) .

6. Pneu (41 ; 51) selon l'une quelconque des revendications 1 à 5, dans lequel le module de conservation en cisaillement G' de la composition de caoutchouc constituant la bande de roulement (42 ; 52) en dehors de la couche de caoutchouc centrale (24 ; 524) ou de la couche de caoutchouc d'épaule (425 ; 525) mesuré à 23 °C, 10 Hz et 10 % de déformation est inférieur ou égal à 6,0 MPa.
